# EUROPÄISCHE PATENTSCHRIFT

(11) **EP 0 597 198 B1**
(45) Veröffentlichungstag und Bekanntmachung des Hinweises auf die Patenterteilung: **07.01.1999**
(21) Anmeldenummer: 93113357.3
(22) Anmeldetag: 20.08.1993
(51) Int. Cl.: H04N 7/087, G09G 1/16

(54) **Verfahren zum Aquirieren von Teletextdaten**
Teletext data aquisition method
Méthode pour l'aquisition de données de télétexte

(30) Priorität: 12.11.1992 EP 92119372
(43) Veröffentlichungstag der Anmeldung: 18.05.1994
(73) Patentinhaber: SIEMENS AKTIENGESELLSCHAFT, 80333 München (DE)
(72) Erfinder: Höck, Günter, D-82377 Penzberg (DE); Bartholomä, Thomas, D-81671 München (DE); Englert, Ulrich, D-81549 München (DE)

(56) Entgegenhaltungen:
- EP-A- 0 333 029
- GB-A- 2 146 878
- IEEE TRANSACTIONS ON CONSUMER ELECTRONICS, Bd. 38, Nr. 3, August 1992, NEW YORK US, Seiten 279-284, XP000311850 M. JÜNKE: "A Multistandard Teletext Processor"
- ELECTRONIC COMPONENTS AND APPLICATIONS, Bd. 6, Nr. 1, 1984, EINDHOVEN NL, Seiten 15-29, XP002006164 J.R. KINGHORN: "Computer Controlled Teletext"

## Beschreibung

Die Erfindung betrifft ein Verfahren zum Aquirieren von Teletextdaten mit den Merkmalen:
- die Teletextdaten sind in Pakete aufgeteilt, die mindestens entweder ein Teil einer Teletextseite sind oder ein Steuerpaket eines ersten Typs, das einer Teletextseite zuordenbar ist, oder ein Steuerpaket eines zweiten Typs,
- die Teletextdaten werden zum Speichern in einem Speicher aus einer zyklischen Folge von Paketen ausgewählt.

Teletext ist eine allgemein bekannte, auf Televisionsdienste gestutzte Übertragungstechnik für digitale Daten. Diese werden beispielsweise in der vertikalen Austastlücke des Fernsehbildes übertragen. Das Datenformat sieht vor, daß die Daten paketweise organisiert sind. Ein Paket enthält unter anderem einen Takteinlauf, einen Startcode und eine Magazin- und Reihenadresse. Durch eine Kopfzeile (Reihe 0) wird der Beginn einer Teletextseite festgelegt, der die nachfolgenden Reihen zugeordnet sind. In der Kopfzeile sind unter anderem eine Seitennummer sowie eine Kennung dafür, ob es sich um eine Haupt- oder Unterseite handelt, vorhanden. Die nachfolgenden Pakete 1 bis 24 enthalten am Bildschirm darzustellende Daten. Reihe 25 kann benutzerdefinierte Daten enthalten. Reihen 26 bis 28 können mehrfach übertragen werden und enthalten durch einen Kennungscode angezeigte zur Seite gehörende Steuerungsdaten. Reihen 29 bis 31 enthalten Steuerungsdaten, die nicht auf eine spezielle Seite bezogen sind, sondern allgemeine Bedeutung haben. Die Reihen 26 bis 31, die auch als Pseudoreihen bezeichnet werden, sind üblicherweise mit einem Hamming-Code versehen.

Zum Empfangen und Verarbeiten der Teletextdaten in einem Empfänger sind eine Vielzahl von Verfahren und Schaltungsanordnungen bekannt. Es besteht dabei grundsätzlich das Bestreben, die Wartezeit auf einen vom Benutzer eingegebenen Befehl, z. B. das Anzeigen einer oder mehrerer Teletextseiten, gering zu halten und einen möglichst hohen Bedienkomfort zu bieten. In der Produktinformation der Firma Siemens "ICs for Entertainment Electronics", Teletext ICs, Version 4.92, Seiten 19 bis 29 und 61 bis 63 ist ein Verfahren und eine Anordnung für die Aquisition der Teletextdaten gezeigt. Dabei können vier Teletextseiten gleichzeitig gesucht und abgespeichert werden. Hierfür ist je ein Seitenspeicher für die Reihen 0 bis 24 vorgesehen. Zum Abspeichern von Pseudoreihen wird ein vollständiger weiterer Teletextseitenspeicher jeweils der betreffenden Teletextseite zugeordnet. Hierbei kann es vorkommen, daß bei mehr als vier zu aquirierenden Teletextseiten je nach zu suchender Seitenanzahl mehrere Durchlaufzyklen der gesendeten Teletextdaten abzuwarten sind, bis ein Suchbefehl vollständig abgearbeitet ist. Darüber hinaus kann, da die Anzahl der Pseudoreihen pro Teletextseite nicht festgelegt ist und von der Einstellung im Sender abhängt, unnötig viel Speicherplatz zu deren Speicherung verschwendet werden.

Aus der europäischen Offenlegungsschrift EP 0 333 029 ist ein Aquisitionsverfahren bekannt, bei dem alle senderseitig empfangenen Teletextdaten in einem Pufferspeicher abgelegt werden. Bei einer Abfrage wird aus den gespeicherten Daten die gewünschte Information ausgelesen. Eine Abfrage ohne Wartezeit ist nur dann gewährleistet, wenn der Pufferspeicher derart groß dimensioniert ist, daß alle gesendeten Teletextdaten gespeichert werden können. Außerdem werden während eines Zyklus mehrfach übertragene Teletextseiten auch mehrfach gespeichert.

Der Erfindung liegt die Aufgabe zugrunde, ein Verfahren der eingangs genannten Art weiterzubilden, so daß eine gute Speicherausnutzung und geringe Wartezeit auf eine Benutzeranfrage gewährleistet ist.

Diese Aufgabe wird durch ein Verfahren mit den Merkmalen des Patentanspruchs 1 gelöst.

Durch das Verfahren wird erreicht, daß der belegte Speicherplatz dynamisch an die zu speichernde Datenmenge angepaßt wird.

Durch Weiterbildungen des Verfahrens wird erreicht, daß bei einem Zyklusdurchlauf beliebig viele Teletextseiten aquirierbar sind. Mehrfachseiten werden dabei nur einmal gespeichert.

Nachfolgend wird die Erfindung anhand der in der Zeichnung dargestellten Figuren eingehend erläutert. Es zeigen
FIG 1 das Blockschaltbild einer Schaltung, mit der das erfindungsgemäße Verfahren realisiert werden kann,
FIG 2 eine Veranschaulichung der Verkettung von Speicherbereichen und
FIG 3 die Verkettung von Speicherbereichen bei einer Weiterbildung.

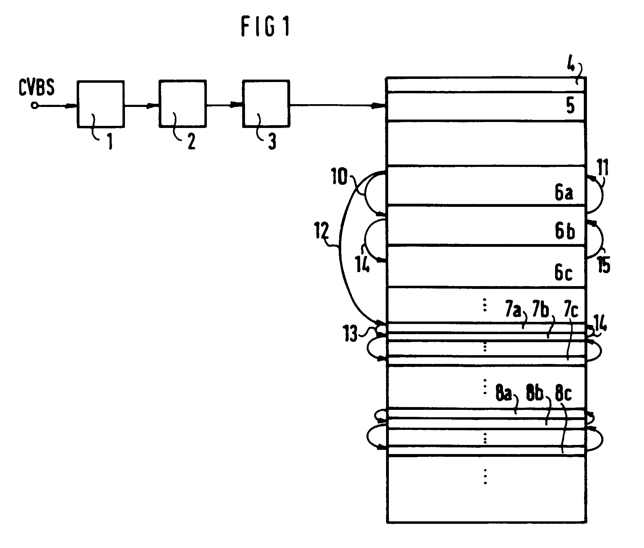

In einem Schaltkreis zum Aquirieren von Teletextsignalen wird gemäß FIG 1 eingangsseitig ein Videosignal CVBS zugeführt, aus dem mittels eines Datenslicers 1 die Teletextdaten abgetrennt werden. Diese werden formatrichtig synchronisiert und parallel gewandelt in einen Speicher 2 mit first-in-first-out-Betriebsweise (FIFO) eingelesen. Der FIFO-Speicher 2 dient zum Trennen des Taktsystems für den Datenempfang von dem der Datenabspeicherung sowie der Weiterverarbeitung zur Anzeige. Die Weiterverarbeitung kann dann frequenzstabil durchgeführt werden. Dies ist insbesondere für Fernsehgeräte vorteilhaft, bei denen Maßnahmen für die Reduzierung von Flimmern durchgeführt werden, für die Datenaquisition und Datenanzeige verschiedene Zeitbasen aufweisen.

Der FIFO-Speicher 2 ist ausgangsseitig mit einem Rechnerkern 3 verbunden. Der Prozessor 3, z. B. in RISC-Architektur, steuert den Datenfluß. Die abgetrennten Teletextdaten werden in einem Speicher 4 abgelegt. Zweckmäßigerweise kann ein Pufferspeicher 5 vorgesehen werden, der zum unmittelbaren Zwischenspeichern der empfangenen Teletextdaten dient, so daß das Einlesen und das nachfolgende gezielte Abspeichern der Daten asynchron voneinander ablaufen.

Erfindungsgemäß werden die im Puffer 5 zwischengespeicherten Daten bei Erfüllung eines Auswahlkriteriums in Speicherbereichen, die über Zeiger verkettet sind, abgelegt. Hierzu weist der Speicher 4 Speicherbereiche eines ersten Typs 6a...c, Speicherbereiche eines zweiten Typs 7a...c und Speicherbereiche eines dritten Typs 8a...c auf. Die Speicherbereiche 6 dienen zum Speichern der Reihen 0 bis 24 einer Teletextseite, die Speicherbereiche 7, 8 zum Speichern je einer Pseudoreihe. Insbesondere sind die Speicherbereiche 7 des zweiten Typs für seitenbezogene Pseudoreihen vorgesehen, die Speicherbereiche 8 für nicht seitenbezogene. Die Speicherbereiche 6 haben eine Größe von 1024 Byte (1 kByte). Die Speicherbereiche 7 weisen eine Größe von 40 Byte auf, die Speicherbereiche 8 eine Größe von 80 Byte. In einem Speicherabschnitt von 1 kByte können somit 25 Speicherbereiche 7 bzw. 12 Speicherbereiche 8 aufeinanderfolgend angelegt werden.

Mittels einer Abfrage werden aus der Gesamtzahl der vom Sender übertragenen Teletextdaten die interessierenden Teletextdaten zur Weiterverarbeitung ausgewählt. Es ist vorgesehen, daß die Speicherbereiche einer Abfrage verkettet werden. Hierzu enthält ein Speicherbereich einen Zeiger, der auf die erste Adresse des in der Kette nachfolgenden Speicherbereichs zeigt. Dieser wiederum enthält einen Zeiger auf den vorhergehenden Speicherbereich. Im Ausführungsbeispiel ist im Speicherbereich 6a eine Teletextseite gespeichert. Durch einen Vorwärtszeiger 10 und den entsprechenden Rückwärtszeiger 11 wird auf den Speicherbereich 6b verwiesen, in dem beispielsweise eine zugehörige Unterseite gespeichert ist. Der Teletextseite des Bereichs 6a ist über einen Zeiger 12 eine Folge von Pseudoreihen 7 zugeordnet. Die erste Pseudoreihe im Bereich 7a ist über Vorwärts- und Rückwärts zeiger 13 bzw. 14 mit einer weiteren Pseudoreihe 7b verbunden usw. Entsprechendes gilt für die übrigen, nicht seitenbezogenen Pseudoreihen in den Speicherbereichen 8. Wenn neue Teletextdaten, die die Abfragebedingung erfüllen, eintreffen, wird die Kette erweitert. Eine z. B. bei einem weiteren Zyklusdurchlauf durch die Abfrage erhaltene neue Unterseite wird dann in den Speicherbereich 6c aufgenommen, der über Zeiger 14, 15 mit dem Bereich 6b verbunden ist. Speicherbereiche, die auf diese Weise neu in eine Kette aufgenommen werden, werden einer vorher angelegten Kette freier Speicherbereiche entnommen.

Bekanntlich sind die Pseudoreihen mit einem Hamming-Code versehen. Um Speicherplatz zu sparen, werden die Pseudoreihen einer Hamming-Decodierung unterworfen. Für die Speicherbereiche 7, 8 genügen dann 40 bzw. 80 Byte zur Speicherung der Daten der entsprechenden Pseudoreihe sowie der Vorwärts- und Rückwärtszeiger.

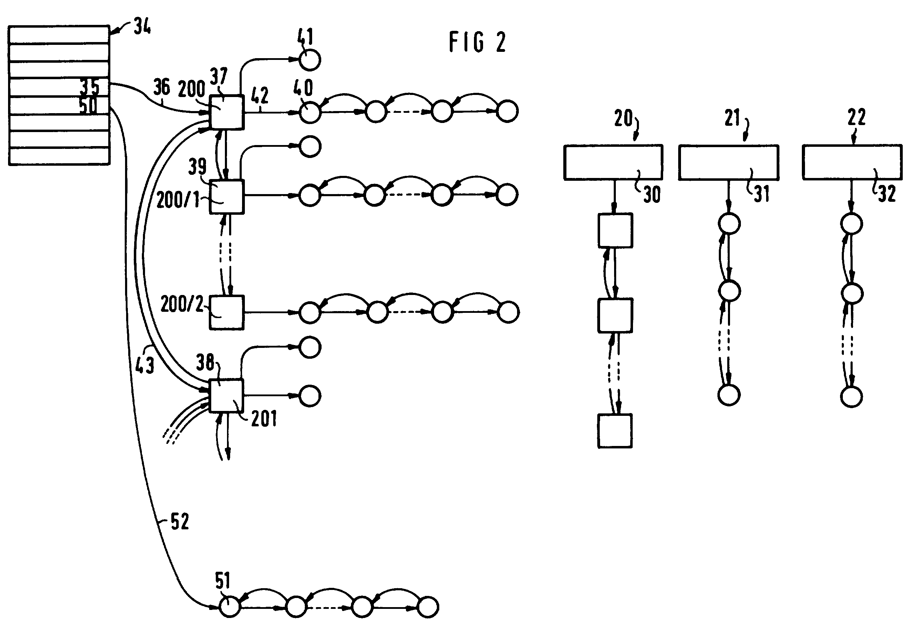

Eine Darstellung der logischen Zuordnung von Speicherbereichen ist der FIG 2 entnehmbar. Anhand deren stellt sich eine Abfrage von Teletextseiten während eines Sendezyklus wie folgt dar, wobei die entsprechende Steuerung beispielsweise von einem Programm des Rechnerkerns 3 durchgeführt wird. Bei der Initialisierung wird gemäß dem Anwenderbedarf je eine freie Kette für die Speicherbereiche des ersten, zweiten und dritten Typs 20, 21, 22 im Speicher 4 angelegt. Die Anfangsadresse ist jeweils in einem Register 30, 31, 32 gespeichert. Beim Eintreffen jeder Teletextseite wird vom Prozessor 3 eine Folge von beispielsweise 8 Abfrageroutinen 34 durchgearbeitet. Dadurch ist es möglich, 8 Suchkriterien für jede Teletextseite gleichzeitig zu bearbeiten. Durch die Abfrage 35 sollen beispielsweise alle Seiten des Magazins 2, also die Seiten 200, 201, 202, ..., samt zugehöriger Unterseiten aquiriert werden. Vom Steuerungsprogramm werden hierzu aus der Kette 20 der freien Speicherbereiche des ersten Typs die Speicherbereiche 37, 38 zur Aufnahme der Basisseiten entnommen. Hierfür genügt es, die vorwärts- und rückwärtsweisenden Zeiger neu zu programmieren. Es ist insbesondere kein Verschieben von Speicherbereichen notwendig. Das Abfragekriterium 35 enthält einen Zeiger 36 auf den ersten Speicherbereich 37 zur Aufnahme der Teletextseite 200. Der Bereich 37 enthält die Steuerungsinformation, daß in ihm die Teletextseite 200 abzulegen ist und empfangene zugeordnete Pseudoreihen und Unterseiten in der Kette abzuspeichern sind. Beim Eintreffen der Seite 201 wird durch das Abfragekriterium 35 auf den Speicherbereich 37 verwiesen. Durch die dort vorliegende Steuerinformation und den Vorwärtszeiger 43 wird auf den Speicherbereich 38 hingewiesen. Die dort enthaltene Steuerinformation veranlaßt das Steuerungsprogramm, den Speicherbereich 38 mit den Daten der Teletextseite 201 zu beschreiben. Dieses Verfahren wird für die weiteren Seiten des Magazins 2 fortgesetzt. In entsprechender Weise wird beim Eintreffen der ersten Unterseite 200/1 der Teletextseite 200 durch die im Bereich 37 gespeicherte Steuerinformation veranlaßt, daß ein Speicherbereich 39 zur Aufnahme der Unterseite 200/1 in die Kette neu eingefügt und mit den zugehörigen Teletextdaten beschrieben wird. Seitenbezogene Pseudoreihen werden nach einer Hamming-Decodierung in einer Kette gespeichert, die mit dem Speicherbereich 40 beginnt und auf die über einen im Bereich 37 gespeicherten Zeiger 42 hingewiesen wird. Für die Pseudoreihe 25, die definitionsgemäß benutzerdefinierte Daten enthält, wird ein Speicherbereich 41 mit der Teletextseite 200 verknüpft. Eine weitere Abfrage 50 der Abfrageroutinen 34 betrifft beispielsweise das Aquirieren von Pseudoreihen mit nicht seitenbezogenen Daten. Diese werden in einer Kette 51 gespeichert, auf die mit einem Anfangszeiger 52 hingewiesen wird. Die Speicherbereiche der Kette 51 werden entsprechend den obigen Ausführungen der Kette 22 der freien Speicherbereiche des dritten Typs entnommen.

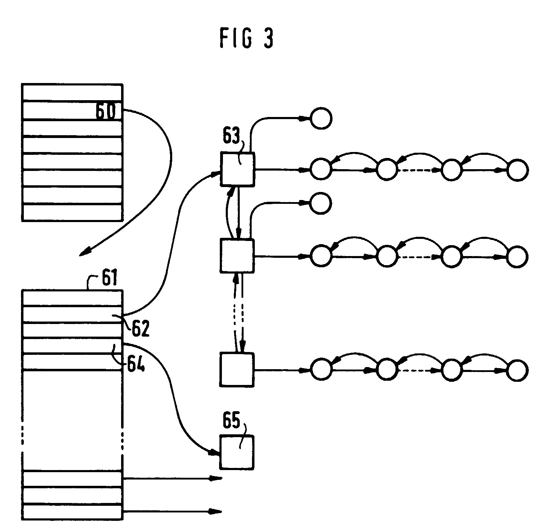

Ein Ausführungsbeispiel für eine weitere Abfrageroutine ist in FIG 3 gezeigt. Die Abfrage 60 enthält anstelle eines Hinweises auf die Adresse des ersten Speicherbereiches einer Kette des ersten Typs einen Hinweis auf eine Nachschlagetabelle 61. In der Tabelle 61 ist jeder möglichen Teletextseite direkt ein Speicherplatz zugeordnet. Der Speicherplatz enthält den jeweiligen Zeiger 62, 64 auf die Adresse des jeweils ersten Speicherbereichs 63 bzw. 65 einer Kette. Dadurch ist ein relativ schneller Zugriff auf die in einer Kette gespeicherten Daten möglich.

Es hat sich gezeigt, daß vier verschiedene Typen von Abfrageroutinen 34 genügen, um eine möglichst schnelle und komfortable Datenaquisition zu ermöglichen. Ein erster Typ ist zur Aquisition von Seiten und Unterseiten vorgesehen, wobei die Zuordnung der Speicheradressen für die Basisseiten in der Nachschlagetabelle 61 abgelegt ist. Wegen des dadurch relativ schnellen Zugriffs auf die Speicherbereiche der Basisseiten ist dieser Suchtyp dann vorteilhaft, wenn viele Teletextseiten zu suchen sind. Ein zweiter Typ entspricht dem ersten Suchtyp mit der Ausnahme, daß der Zeiger auf den ersten Speicherbereich in der Suchroutine enthalten ist. Bei einem dritten Suchtyp ist die Möglichkeit vorgesehen, eine Abfragemaske für die Reihe 0 der Teletextseite anzuwenden. Hier werden Unterseiten wie Basisseiten verarbeitet. Ein vierter Suchtyp ist für das Aquirieren von Pseudoreihen mit nicht seitenbezogenen Daten vorgesehen.

Das beschriebene Verfahren bietet also den Vorteil, daß bei entsprechender Wahl des Abfragekriteriums beliebige und nur durch die Speicherkapazität begrenzt beliebig viele Teletextseiten und Pseudoreihen in einem Zyklusdurchlauf aquirierbar sind. Senderseitig mehrfach übertragene Seiten werden stets nur einmal im dafür vorgesehenen Speicherbereich gespeichert. Für das Speichern von Pseudoreihen wird nur die minimal notwendige Größe von Speicher beschrieben, so daß kein Speicherraum ungenutzt verschwendet wird.

## Patentansprüche

1. Verfahren zum Aquirieren von Teletextdaten mit den Merkmalen:
- die Teletextdaten sind in Pakete aufgeteilt, die mindestens entweder ein Teil einer Teletextseite sind oder ein Steuerpaket eines ersten Typs, das einer Teletextseite zuordenbar ist, oder ein Steuerpaket eines zweiten Typs,
- die Teletextdaten werden zum Speichern in einem Speicher (4) aus einer zyklischen Folge von Paketen ausgewählt,
**dadurch gekennzeichnet,** daß
- jede Teletextseite in einem Speicherbereich (6) eines ersten Typs zum Speichern bestimmter Reihen dieser Teletextseite speicherbar ist,
- jedes Steuerpaket vom ersten Typ in einem Speicherbereich (7) eines zweiten Typs zum Speichern einer Pseudoreihe speicherbar ist,
- jedes Steuerpaket vom zweiten Typ in einem Speicherbereich (8) eines dritten Typs zum Speichern einer Pseudoreihe speicherbar ist,
- die Speicherbereiche (6, 7, 8) je eines Typs verkettet sind und
- die Anzahl der Speicherbereiche jeder Kette durch Auf- oder Entnahme von mindestens einem Speicherbereich auf die Anzahl der darin gespeicherten Pakete anpaßbar ist.

2. Verfahren nach Anspruch 1,
**dadurch gekennzeichnet,** daß mindestens zwei Speicherbereiche (6a, 6b) je eines Typs verkettet sind, indem durch einen im vorausgehenden Speicherbereich (6a) gespeicherten Zeiger (10) auf eine Speicheradresse des nachfolgenden Speicherbereichs (6b) verwiesen wird und durch einen im nachfolgenden Speicherbereich (6b) gespeicherten Zeiger (11) auf eine Speicheradresse des vorhergehenden Speicherbereichs (6a) verwiesen wird.

3. Verfahren nach Anspruch 2,
**dadurch gekennzeichnet,** daß je ein Zeiger (36, 42, 52) für den ersten Speicherbereich einer Kette vorgesehen ist, und der Zeiger (42) für den ersten Speicherbereich (40) der Kette von Speicherbereichen des zweiten Typs im Speicherbereich (37) für die zuordenbare Teletextseite gespeichert ist.

4. Verfahren nach einem der Ansprüche 1 bis 3,
**dadurch gekennzeichnet,** daß vor dem Speichern eines Steuerpakets des ersten Typs und des zweiten Typs jeweils eine Hamming-Decodierung durchgeführt wird.

5. Verfahren nach Anspruch 3,
**dadurch gekennzeichnet,** daß der Zeiger auf den ersten Speicherbereich einer Kette von Speicherbereichen des ersten Typs an einer Speicherstelle einer Nachschlagetabelle (61) gespeichert ist, deren physikalische Adresse einer Seitennummer der Teletextseite entspricht.

6. Verfahren nach einem der Ansprüche 1 bis 5,
**dadurch gekennzeichnet,** daß ein Paket durch Vergleich der im Paket enthaltenen Zuordnungsparameter mit einem Abfragekriterium (35) aus der zyklischen Folge der Teletextdaten ausgewählt wird und dann gemäß je einer in den Speicherbereichen einer Kette von Speicherbereichen des ersten Typs enthaltenen Steuerinformation in einen Speicherbereich des jeweils vorgesehenen Typs geleitet wird.

## Claims

1. Method for acquiring teletext data having the features:
- the teletext data are split into packets which are either at least a part of one teletext page or a control packet of a first type which can be associated with a teletext page, or a control packet of a second type,
- the teletext data are selected from a cyclic sequence of packets for storage in a memory (4),
characterized in that
- each teletext page can be stored in a memory area (6) of a first type for storing specific lines of this teletext page,
- each control packet of the first type can be stored in a memory area (7) of a second type for storing a pseudo-line
- each control packet of the second type can be stored in a memory area (8) of a third type for storing a pseudo-line
- the memory areas (6, 7, 8) of in each case one type are linked, and
- the number of memory areas in each chain can be matched to the number of packets stored in them by adding or removing at least one memory area.

2. Method according to Claim 1, characterized in that at least two memory areas (6a, 6b) of in each case one type are linked, in that a pointer (10) which is stored in the preceding memory area (6a) is used to refer to a memory address in the following memory area (6b), and a pointer (11) which is stored in the following memory area (6b) is used to refer to the memory address in the preceding memory area (6a).

3. Method according to Claim 2, characterized in that a pointer (36, 42, 52) in is each case provided for the first memory area in a chain, and the pointer (42) for the first memory area (40) in the chain of memory areas of the second type is stored in the memory area (37) for the teletext page which can be associated with it.

4. Method according to one of Claims 1 to 3, characterized in that Hamming decoding is in each case carried out before the storage of a control packet of the first type and of the second type.

5. Method according to Claim 3, characterized in that the pointer to the first memory area in a chain of memory areas of the first type is stored at a memory location in a look-up table (61) whose physical address corresponds to a page number of the teletext page.

6. Method according to one of Claims 1 to 5, characterized in that a packet is selected from the cyclic sequence of teletext data by comparing the association parameters contained in the packet with a question criterion (35) and a move is then made to a memory area of the respective intended type in accordance with in each case one control information item which is contained in the memory areas of a chain of memory areas of the first type.

## Revendications

1. Procédé d'acquisition de données de télétexte comportant les dispositions :
- les données de télétexte sont réparties en paquets qui sont une partie d'une page de télétexte ou un paquet de commande d'un premier type qui peut être associé à une page de télétexte ou un paquet de commande d'un deuxième type,
- pour l'enregistrement dans une mémoire (4), les données de télétexte sont sélectionnées dans une succession cyclique de paquets,
caractérisé en ce que,
- chaque page de télétexte peut être enregistrée dans une zone (6) de mémoire d'un premier type destinée à l'enregistrement de rangées déterminées de cette page de télétexte,
- chaque paquet de commande du premier type peut être enregistré dans une zone (7) de mémoire d'un deuxième type destinée à l'enregistrement d'une pseudo-rangée,
- chaque paquet de commande du deuxième type peut être enregistré dans un zone (8) de mémoire d'un troisième type destinée à l'enregistrement d'une pseudo-rangée,
- les zones (6, 7, 8) de mémoire de chaque type sont enchaînées et
- le nombre des zones de mémoire de chaque chaîne peut être adapté au nombre des paquets qui y sont contenus en ajoutant ou en enlevant au moins une zone de mémoire.

2. Procédé suivant la revendication 1, caractérsé en ce qu'il est enchaîné au moins deux zones (6a 6b) de mémoire chacune d'un type en renvoyant par un indicateur (10) enregistré dans la zone (6a) de mémoire précédente sur une adresse de mémoire de la zone (6b) de mémoire suivante et en renvoyant par un indicateur (11) enregistré dans la zone (6b) de mémoire suivante sur une adresse de mémoire de la zone (6a) de mémoire précédente.

3. Procédé suivant la revendication 2, caractérisé en ce qu'il est prévu chaque fois un indicateur (36, 42, 52) pour la première zone de mémoire d'une chaîne et en ce que l'indicateur (42) pour la première zone (40) de mémoire de la chaîne de zones de mémoire du deuxième type est enregistré dans la zone (37) de mémoire pour la page de télétexte qui peut être associée.

4. Procédé suivant l'une des revendications 1 à 3, caractérisé en ce que l'on effectue chaque fois un décodage de Hamming avant l'enregistrement d'un paquet de commandes du premier type et du deuxième type.

5. Procédé suivant la revendication 3, caractérisé en ce que l'indicateur pointant sur la première zone de mémoire d'une chaîne de zones de mémoire du premier type est enregistré à un emplacement de mémoire d'une table (61) à consulter dont l'adresse physique correspond à un numéro de page de la page de télétexte.

6. Procédé suivant l'une des revendications 1 à 5, caractérisé en ce qu'un paquet est sélectionné dans la succession cyclique des données de télétexte en comparant le paramètre d'association contenu dans le paquet à un critère (35) d'interrogation et ensuite, suivant chaque fois une information de commande contenue dans les zones de mémoire d'une chaîne de zones de mémoire du premier type, envoyé à une zone de mémoire du type prévu associé.
